**Europäisches Patentamt**

**European Patent Office**

**Office européen des brevets**

(19)

(11) Veröffentlichungsnummer: **0 238 922**
**B1**

# EUROPÄISCHE PATENTSCHRIFT

(12)

(45) Veröffentlichungstag der Patentschrift:
24.01.90

(21) Anmeldenummer: **87103340.3**

(22) Anmeldetag: **09.03.87**

(51) Int. Cl.⁴: **G01D 5/20**

(54) **Magnetischer Wegsensor.**

(30) Priorität: **27.03.86 DE 3610479**

(43) Veröffentlichungstag der Anmeldung:
**30.09.87 Patentblatt 87/40**

(45) Bekanntmachung des Hinweises auf die Patenterteilung:
**24.01.90 Patentblatt 90/4**

(84) Benannte Vertragsstaaten:
**BE DE FR GB IT SE**

(56) Entgegenhaltungen:
**DE-A- 2 325 752**

(73) Patentinhaber: **VACUUMSCHMELZE GMBH, Grüner Weg 37 Postfach 2253, D-6450 Hanau 1(DE)**

(72) Erfinder: **Nilius, Hans-Joachim, Leipziger Strasse 29, D-6453 Seligenstadt(DE)**

## Beschreibung

Die Erfindung betrifft einen magnetischen Wegsensor zur Erfassung der Lage eines Meßobjektes, das berührungslos längs eines von zwei wechselstromgespeisten Erregerspulen magnetisierten weichmagnetischen Kerns bewegbar angeordnet ist und - abhängig von seiner Position - an einer Stelle des weichmagnetischen Kerns einen virtuellen Luftspalt erzeugt und damit den magnetischen Streufluß des Systems und die in mindestens einer Sekundärspule erzeugte Spannung beeinflußt.

Ein derartiger Wegsensor ist beispielsweise in der Zeitschrift Technisches Messen, 50. Jahrgang,1983, Heft 10, auf den Seiten 373 bis 379 beschrieben. Dieser Wegsensor enthält einen langgestreckten rechteckförmigen magnetischen Kern, auf dessen Schmalseiten je eine Primär- und eine Sekundärwicklung angeordnet sind. Das Meßobjekt, dessen Lage durch den Wegsensor bestimmt werden soll, besteht aus einem Kurzschlußring, der eine der längeren Seiten des weichmagnetischen Kerns umschließt. Dieser Kurzschlußring bewirkt, daß an seiner jeweiligen Position ein virtueller Luftspalt in dem weichmagnetischen Kern entsteht, da die in ihm induzierten Kurzschlußströme weitgehend verhindern, daß der magnetische Kern an der Stelle des Kurzschlußrings einen magnetischen Fluß führt.

Wenn sich das Meßobjekt (Kurzschlußring) in der Mitte des langgestreckten Schenkels des weichmagnetischen Kerns befindet, besitzen beide jeweils aus Primär- und Sekundärspule bestehenden Magnetsysteme das gleiche Streufeld, so daß die in den Sekundärspulen erzeugten Spannungen einander gleich sein können und sich in einer Differenzschaltung gegenseitig aufheben.

Verschiebt sich das Meßobjekt aus der Mittellage, so wird die induzierte Spannung in einer der Sekundärwicklungen vergrößert und in der anderen verkleinert. Man erhält also eine Spannung, deren Größe abhängig von der Lage des Meßobjektes ist, so daß der von dem Meßobjekt zurückgelegte Weg bestimmt werden kann.

Aus der DE-A 2 325 752 ist ein elektrischer Wegumformer bekannt, bei dem ein Magnet als Meßobjekt eine längliche Spule abtastet.

Aufgabe der vorliegenden Erfindung ist es, eine eingangs erwähnte Meßeinrichtung bei mindestens gleicher Genauigkeit wesentlich zu vereinfachen und deren Einsatzmöglichkeiten zu erweitern.

Diese Aufgabe wird erfindungsgemäß dadurch gelöst, daß der weichmagnetische Kern als längsgestreckter Streifen ausgebildet ist, daß um den weichmagnetischen Kern mit Abstand voneinander die zwei Erregerspulen gewickelt und so an eine Wechselspannungsquelle angeschlossen sind, daß die in den Erregerspulen fließenden Erregerströme den weichmagnetischen Kern gegensinnig magnetisieren, daß zwischen den Erregerspulen die Sekundärspule auf den weichmagnetischen Kern gewickelt ist, deren Länge dem erfaßbaren Weg entspricht und daß im Bereich der Sekundärspule das Meßobjekt längs zum weichmagnetischen Kern bewegbar ist.

Vorteilhafte Weiterbildungen der Erfindung sind in den abhängigen Patentansprüchen beschrieben.

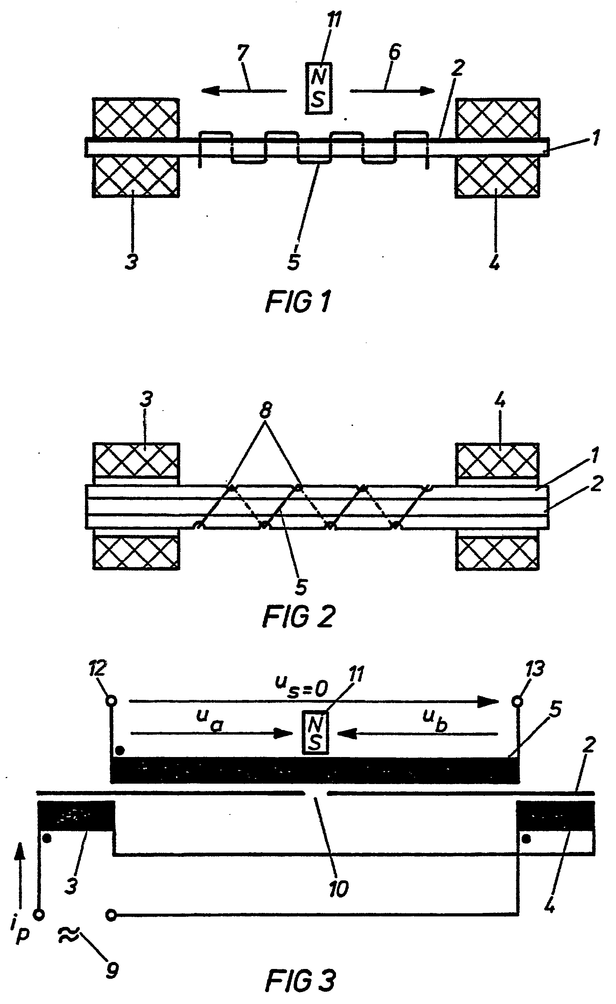

Die Wirkungsweise des neuen Wegsensors wird nachstehend anhand der Figuren 1 bis 4 beschrieben. Figur 5 zeigt eine Anordnung mit verringerter Empfindlichkeit gegen störende Gleichfelder.

In Figur 1 ist der Aufbau des erfindungsgemäßen Wegsensors schematisch - ohne Halterungen, Gehäuse usw. - dargestellt. Er besteht aus einem Träger 1, der beispielsweise aus einem Kunststoffstreifen bestehen kann und aus einem auf den Träger 1 aufgeklebten Streifen aus amorphem Metall, der den weichmagnetischen Kern bildet.

Hierzu kann jeder weichmagnetische Werkstoff verwendet werden, allerdings zeichnet sich amorphes Metall dadurch aus, daß es biegeunempfindlich ist und eine hohe Permeabilität aufweist. Verwendet man ein amorphes Metall aus einer Kobalt-Basislegierung mit verschwindend kleiner Magnetostriktion, so wäre es ohne weiteres möglich, zusammen mit einem elastischen Träger auch nichtgeradlinige Wegsensoren herzustellen.

Im Bereich der Enden des Trägers 1 und des weichmagnetischen Kerns 2 sind zwei Erregerspulen 3 und 4 angeordnet; eine Sekundärspule 5 befindet sich zwischen den Erregerspulen 3 und 4 und füllt den gesamten Raum zwischen diesen Erregerspulen aus.

Als Meßobjekt 11 dient ein Dauermagnet, der in Richtung der Pfeile 6 und 7 - also längs des weichmagnetischen Kerns 2 - verschiebbar ist. Der Abstand des Meßobjektes 11 von der Sekundärspule 5 bzw. vom weichmagnetischen Kern 2 kann so groß gewählt werden, daß der weichmagnetische Kern 2 von dem Magneten gerade noch gesättigt wird. Durch die Sättigung des weichmagnetischen Kerns 2 in der Position des Meßobjektes 11 wird erreicht, daß hier ein virtueller Luftspalt entsteht.

Wie beim Bekannten könnte man beim Gegenstand des erfindungsgemäßen Wegsensors ebenfalls einen Kurzschlußring verwenden; dies würde immer noch eine Vereinfachung bedeuten, da der Kurzschlußring seitlich einfach auf den weichmagnetischen Kern 2 aufgeschoben werden kann, während er beim Bekannten um einen Schenkel eines geschlossenen magnetischen Rechteckkerns gewickelt werden muß.

Vorteilhafterweise besitzen die Windungen der Sekundärspule 5 voneinander gleichen Abstand, da sich dann ein von der Verschiebung des Meßobjektes 11 weitgehend linear abhängiges Ausgangssignal ergibt - also kein besonderer Aufwand zur Linearisierung des analogen Ausgangssignals des erfindungsgemäßen Wegsensors erforderlich ist.

Figur 2 zeigt, daß sich auf besonders einfache Weise ein gleichmäßiger Abstand der einzelnen Windungen der Sekundärspule 5 voneinander dadurch erzielen läßt, daß der Träger 1 etwas breiter gewählt ist als der weichmagnetische Kern 2 und an seinen Rändern Einkerbungen 8 zur Aufnahme des die Windungen der Sekundärspule 5 bildenden Drahtes besitzt.

In Figur 3 ist die Schaltung der in den Figuren 1 und 2 dargestellten Anordnung aufgezeigt. Die Erregerwicklungen 3 und 4 sind in Reihe an eine Wechselspannungsquelle 9 so angeschlossen, daß sie versuchen, den weichmagnetischen Kern 2 gegensinnig zu magnetisieren. Mit dem Meßobjekt 11 in Mittelstellung ergibt sich ein durch Unterbrechung des weichmagnetischen Kerns 2 angedeuteter virtueller Luftspalt 10 in der Mitte zwischen den Eregerspulen 3 und 4. Da sich an dieser Stelle ohnehin wegen der gegensinnigen Magnetisierung der Enden des weichmagnetischen Kerns 2 kein magnetischer Fluß befindet, hat der virtuelle Luftspalt an dieser Stelle keinen Einfluß auf die in der Sekundärspule 5 erzeugten Spannungen. Diese Spannungen sind mit $u_a$ und $u_b$ bezeichnet und sind einander entgegengerichtet (um 180° phasenverschoben), wie in Figur 3 angedeutet ist. An den Anschlüssen 12 und 13 der Sekundärspule 5 liegt damit die Summenspannung $u_s$ an, die bei der in Figur 3 dargestellten Position des Meßobjektes 11 den Wert 0 hat.

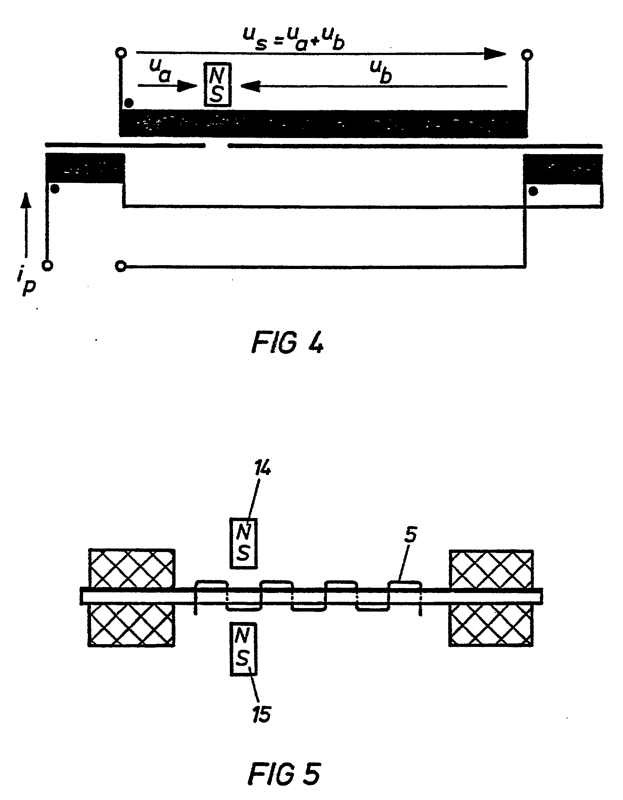

Figur 4 zeigt die gleiche Anordnung wie Figur 3 nur mit dem Unterschied, daß das Meßobjekt 11 nach links verschoben ist. Man sieht, daß hierdurch die Spannung $u_a$ vermindert und die Spannung $u_b$ vergrößert ist, so daß sich ein von der Position des Meßobjektes 11 abhängiger Wert für die Summenspannung $u_s$ ergibt. Durch die exzentrische Lage des virtuellen Luftspalts 10 wird erreicht, daß in der Mitte zwischen den Erregerspulen 3 und 4 der von der Erregerspule 3 ausgehende Fluß geschwächt wird, so daß der Magnetisierungseinfluß der Erregerspule 4 überwiegt.

Bei der beschriebenen erfindungsgemäßen Anordnung mit einem Dauermagneten als Meßobjekt 11 können magnetische Gleichfelder je nach Stärke und Richtung den durch das Meßobjekt 11 erzeugten virtuellen Luftspalt 10 in Größe und Lage beeinflussen. Die sich hieraus ergebende Verfälschung des Meßwertes (Summenspannung $u_s$) läßt sich wesentlich verringern, wenn man zwei zu beiden Seiten der Sekundärspule 5 einander gegenüber angeordnete Dauermagnete 14 und 15 verwendet, die zusammen dann das Meßobjekt 11 bilden. Verwendet man Magnete als Meßobjekt 11, so können diese beliebige Richtungen im Verhältnis zum weichmagnetischen Kern 2 aufweisen, vorausgesetzt, daß sie an ihrer Position den weichmagnetischen Kern 2 sättigen können und damit einen virtuellen Luftspalt erzeugen.

## Patentansprüche

1. Magnetischer Wegsensor zur Erfassung der Lage eines Meßobjektes (11), das berührungslos längs eines von zwei wechselstromgespeisten Erregerspulen (3, 4) magnetisierten weichmagnetischen Kerns (2) bewegbar angeordnet ist und - abhängig von seiner Position - an einer Stelle des weichmagnetischen Kerns (2) einen virtuellen Luftspalt (10) erzeugt und damit den magnetischen Streufluß des Systems und die in mindestens einer Sekundärspule (5) erzeugte Spannung beeinflußt, **dadurch gekennzeichnet**, daß der weichmagnetische Kern (2) als längsgestreckter Streifen ausgebildet ist, daß um den weichmagnetischen Kern (2) mit Abstand voneinander die zwei Erregerspulen (3, 4) gewickelt und so an eine Wechselspannungsquelle (9) angeschlossen sind, daß die in den Erregerspulen (3, 4) fließenden Erregerströme den weichmagnetischen Kern (2) gegensinnig magnetisieren, daß zwischen den Erregerspulen (3, 4) die Sekundärspule (5) auf den weichmagnetischen Kern (2) gewickelt ist, deren Länge dem erfaßbaren Weg entspricht und daß im Bereich der Sekundärspule (5) das Meßobjekt (11) längs zum weichmagnetischen Kern (2) bewegbar ist.

2. Magnetischer Wegsensor nach Anspruch 1, **dadurch gekennzeichnet**, daß als Meßobjekt (11) ein in der Nähe des weichmagnetischen Kerns (2) angeordneter Dauermagnet vorgesehen ist.

3. Magnetischer Wegsensor nach Anspruch 2, **dadurch gekennzeichnet**, daß an zwei gegenüberliegenden Seiten des magnetischen Kerns (2) als Meßobjekt (11) je ein Magnet (14, 15) so angeordnet ist, daß unterschiedliche Pole an den dem benachbarten Kern (2) zugewandten Seiten vorhanden sind.

4. Magnetischer Wegsensor nach Anspruch 1, **dadurch kennzeichnet**, daß als weichmagnetischer Kern (2) ein Streifen aus amorphem Metall vorgesehen ist.

5. Magnetischer Wegsensor nach Anspruch 4, **dadurch gekennzeichnet**, daß der den magnetischen Kern (2) bildende Streifen aus amorphem Metall auf einen Träger (1) aufgeklebt ist.

6. Magnetischer Wegsensor nach Anspruch 5, **dadurch gekennzeichnet**, daß der Träger (1) in Abständen voneinander Einkerbungen (8) zur Aufnahme und Fixierung der Windungen der Sekundärspule (5) aufweist.

7. Magnetischer Wegsensor nach Anspruch 1, **dadurch gekennzeichnet**, daß die Sekundärspule (5) so gewickelt ist, daß ihre Windungen voneinander überall den gleichen Abstand aufweisen.

8. Magnetischer Wegsensor nach Anspruch 4, **dadurch gekennzeichnet**, daß für den Streifen aus amorphem Metall eine Kobalt-Basislegierung mit niedriger Magnetostriktion verwendet wird.

9. Magnetischer Wegsensor nach Anspruch 8, **dadurch gekennzeichnet**, daß der Streifen aus amorphem Metall auf einen elastischen Träger (1) aufgeklebt ist, so daß sich der magnetische Kern (2) mit dem Träger (1) verbiegen läßt und der Wegsensor auch nichtlineare Bewegungen erfassen kann.

## Revendications

1. Capteur magnétique de position pour détecter la position d'un objet de mesure (11) qui est disposé de façon a pouvoir se déplacer sans contact le long d'un noyau magnétique mou (2) magnétisé par deux bobines excitatrices (3, 4) alimentées en courant alternatif et qui, en fonction de sa position, créé un entrefer virtuel (10) a un emplacement du noyau magnétique mou (2), et influence ainsi le flux magnétique de perte du système et la tension engendrée moins une bobine secondaire (5), capteur magnétique caractérisé en ce que le noyau magnétique mou (2) est réalisé sous la forme d'une bande. longiforme, en ce que, autour de ce noyau magnétique mou (2), sont enroulées, à une certaine distance l'une de l'autre, les deux bobines excitatrices (3, 4) qui sont raccordées à une source de tension alternative (9) de façon que les courants excitateurs circulant dans ces bobines excitatrices (3, 4) magnétisent en sens inverse le noyau magnétique mou (2), tandis que la bobine secondaire (5) est enroulée sur le noyau magnétique mou (2) entre les bobines excitatrices (3, 4), la longueur de cette bobine secondaire correspondant à la course susceptible d'être détectée, et l'objet de mesure (11) étant susceptible d'être déplacé le long du noyau magnétique mou (2) dans la zone de la bobine secondaire (5).

2. Capteur magnétique de position selon la revendication 1, caractérisé en ce qu'il est prévu en tant qu'objet de mesure (11) un aimant permanent disposé au voisinage du noyau magnétique mou (2).

3. Capteur magnétique de position selon la revendication 2, caractérisé en ce que, sur deux côtés opposés du noyau magnétique (2) est disposé, en tant qu'objet de mesure (11), respectivement un aimant (14, 15), les côtés de ces aimants en regard du noyau magnétique (2) étant de polarité différente.

4. Capteur magnétique de position selon la revendication 1, caractérisé en ce qu'une bande en métal amorphe est prévue en tant que noyau magnétique mou (2).

5. Capteur magnétique de position selon la revendication 4, caractérisé en ce que la bande en métal amorphe constituant le noyau magnétique mou (2) est collée sur un support (1).

6. Capteur magnétique de position selon la revendication 5, caractérisé en ce que le support (1) comporte, à intervalles les unes des autres, des encoches (8) destinées à recevoir et à fixer les spires de la bobine secondaire (5).

7. Capteur magnétique de position selon la revendication 1, caractérisé en ce que la bobine secondaire (5) est bobinée de telle façon que ses spires sont partout à la même distance les unes des autres.

8. Capteur magnétique de position selon la revendication 4, caractérisé en ce que, pour la bande en métal amorphe, on utilise un alliage de base au cobalt avec une magnétostriction très réduite.

9. Capteur magnétique de position selon la revendication 8, caractérisé en ce que la bande en métal amorphe est collée sur un support, élastique (1), de sorte que le noyau magnétique (2) avec son support (1) peuvent être courbés et que le capteur de position peut, également, détecter les déplacements non linéaires.

## Claims

1. A magnetic position sensor for detecting the position of an object (11) to be measured which is arranged so that it can be moved without contact along a soft-magnetic core (2) magnetised by two exciter cores (3, 4) fed with alternating current and – in dependence upon its position – produces a virtual air gap (10) at one location of the soft-magnetic core (2) and thus influences the magnetic stray flux of the system and the voltage generated in at least one secondary coil (5), characterised in that the soft-magnetic core (2) is in the form of an elongated strip, that the two exciter coils (3, 4) are wound around the soft-magnetic core (2) spaced at an interval from one another and are connected to an alternating voltage source (9) in such manner that the exciter currents flowing in the exciter coils (3, 4) magnetise the soft-magnetic core (2) in opposite directions, that between the exciter coils (3, 4) the secondary coil (5) is wound onto the soft-magnetic core (2), where the length of the secondary coil corresponds to the detectable path, and that in the region of the secondary coil (5) the object (11) to be measured can be moved longitudinally in relation to the soft-magnetic core (2).

2. A magnetic position sensor as claimed in Claim 1, characterised in that a permanent magnet arranged in the vicinity of the soft-magnetic core (2) is provided as the object (11) to be measured.

3. A magnetic position sensor as claimed in Claim 2, characterised in that a magnet (14, 15) is arranged on each of two opposite sides of the magnetic core (2) as the object (11) to be measured, in such manner that different poles are located on the sides facing towards the adjacent core (2).

4. A magnetic position sensor as claimed in Claim 1, characterised in that a strip of amorphous metal is provided as soft-magnetic core (2).

5. A magnetic position sensor as claimed in Claim 4, characterised in that the strip of amorphous metal which forms the magnetic core (2) is bonded by adhesive to a carrier (1).

6. A magnetic position sensor as claimed in Claim 5, characterised in that the carrier (1) is provided with grooves (8) which are arranged at intervals from one another and which accommodate and fix the turns of the secondary coil (5).

7. A magnetic position sensor as claimed in Claim 1, characterised in that the secondary coil (5) is wound in such manner that its turns are spaced by the same distance from one another at all points.

8. A magnetic position sensor as claimed in Claim 4, characterised in that a cobalt-based alloy with low magnetostriction is used for the strip of amorphous metal.

9. A magnetic position sensor as claimed in Claim 8, characterised in that the strip of amorphous metal is bonded by adhesive to an elastic carrier (1) so that the magnetic core (2) can bend together with the carrier (1) and the position sensor is also capable of detecting non-linear movements.

FIG 1

FIG 2

FIG 3

$$u_s = u_a + u_b$$

$u_a$

$u_b$

$\boxed{\begin{array}{c} N \\ S \end{array}}$

$i_p$

## FIG 4

14

$\boxed{\begin{array}{c} N \\ S \end{array}}$

5

$\boxed{\begin{array}{c} N \\ S \end{array}}$

15

## FIG 5